# EUROPEAN PATENT SPECIFICATION

(11) **EP 3 692 253 B1**
(45) Date of publication and mention of the grant of the patent: **10.11.2021**
(21) Application number: 18786212.3
(22) Date of filing: 27.09.2018
(51) Int. Cl.: E03B 11/00, H02J 3/28, H02J 3/38, F03B 13/06, H02J 15/00

(54) **SYSTEM FOR STORAGE OF ENERGY AND/OR WATER**
SYSTEM ZUR SPEICHERUNG VON ENERGIE UND / ODER WASSER
SYSTÈME DE STOCKAGE D'ÉNERGIE ET / OU D'EAU

(30) Priority: 06.10.2017 DK PA201700559
(43) Date of publication of application: 12.08.2020
(73) Proprietor: AquaNamic Holding ApS, 6440 Augustenborg (DK)
(72) Inventor: GRAMKOW, Asger, 6440 Augustenborg (DK)
(74) Representative: Andreasen, Søren Laursen Vasegaard
(86) International application number: PCT/DK2018/050237
(87) International publication number: WO 2019/068293

(56) References cited:
- WO-A1-02/083494
- WO-A1-2010/141079
- WO-A2-2010/003412
- GB-A- 1 117 553
- JP-A- 2000 109 178
- JP-U- S57 177 991

## Description

### Field of invention

The present invention relates to a system for storage of energy and/or water (preferably fresh water).

### Prior art

There is a general need for systems configured to store electrical energy in order to balance supply and demand in the electric power grid. The need for such systems becomes more prominent with the increasing use of renewable energy sources such as wind and solar, because the pattern of energy generation from those sources tends to be irregular due to causes such as the weather, and not necessarily well-matched to the demand.

Currently, the energy storage technology that has by far the largest base of experience at significant size scales is pumped storage hydro. A conventional pumped storage hydro uses two reservoirs of water at different elevations. To store energy, water is pumped from the lower reservoir up to the upper reservoir. To recover energy, the water can flow back from the upper reservoir to the lower reservoir through a turbine generator or similar energy extractor.

Currently, the generating capacity of pumped storage hydro amounts to several percent of the total generating capacity of the entire electric power grid. However, new sites for pumped storage hydro are often non-optimal for reasons of topography, location, or environmental sensitivity. The use of pumped storage technology in more locations including on sites, that are not mountainous for instance in gravel, sand, coal, brown coal and other type of pits manmade to harvest raw materials or naturally established swallow or river beds, but with a certain height from top to bottom. Height difference is typical from 30 to 300 meters.

The Danish patent DK177031 and in US 20110113769 A1 disclose a principle for underground pumped hydroelectric storage. In these systems, pressure head is created by the weight of soil on top of a deformable bag. The soil has a density greater than the density of water. The soil may optionally be piled to an elevation greater than the elevation of surrounding terrain. When the bag is filled with a fluid such as water to store energy, the soil on top of the bag is lifted upwards. For recovery of energy, the fluid such as water can flow out of the bag as the soil on top of the bag settles to a lower elevation. Energy storage is accomplished using a pump, and energy recovery is accomplished with a turbine-generator. The system has, however, a limited storage capacity. Accordingly, it would be desirable to provide a system having a larger storage capacity.

EP0034023A1 discloses a pool for the storage of fluids under pressure comprising a pit impermeable to the stored fluid and having means for the introduction and withdrawal of the stored fluid The pool comprises cover means sealing the pit from above and an incoherent protective layer on said cover means, wherein said cover means is a membrane that is elastic under the storage pressure anchored circumferentially near the edge portion of the pit and adapted to vary between a deflated, fully sagging state in which it bears on the surface of the pit and an inflated state in which it bulges above the pit, and in that said protective layer is adapted to follow said variations of the membrane. This solution is, however, not suitable for large scale systems because the top portion of the membrane will be subject to tensile force that will significantly reduce the service life of the membrane.

WO 20100141079 A1 discloses an energy storage system based on directing fluid into an expandable receptacle that has a relatively heavy mass above it. The fluid fills the receptacle such that it expands and lifts up the heavy mass above it. At a time when energy is needed, the fluid can be allowed to flow out of the receptacle and through a turbine or hydraulic motor to generate power or electricity. Intermittent or unreliable sources of power can be used to fill the receptacle, or power from a power grid can be used to fill the receptacle at times that are off-peak. During peak-load times, the potential energy of the fluid in the receptacle can be converted to power. The receptacle can also be used to control water flows and can provide a source of power and potable water to a community.

JP 2000109178 A discloses a liquid storage bag that stores liquids such as orinocotar emulsion and petroleum in the internal space with at least a part placed in a supporting liquid such as seawater, and the body of the bag is made of a soft synthetic resin. The two rectangular sheets are superposed on each other and joined and integrated at the peripheral edge thereof, and the non-joined portion remains in a part of the upper end joint portion of the bag body and communicates inside and outside. For liquid storage, a pipe attachment port is formed, and a supply / discharge pipe is inserted into the pipe attachment port so that one end thereof projects into the internal space of the bag body and is joined in a watertight state.

Accordingly, it is an object of the present invention to provide a system having both a large storage capacity and a long service life. It is also an object of the present invention to provide a system that is more robust and reliable than the prior art systems.

### Summary of the invention

The object of the present invention can be achieved by a system as defined in claim 1. Preferred embodiments are defined in the dependent subclaims, explained in the following description, and illustrated in the accompanying drawings.

The object of the present invention can be achieved by a system for storage of energy and/or water, wherein said system comprises:
- a watertight membrane being at least partly covered with soil or sand,
- an inlet pipe connected to said membrane,
wherein the system comprises a pump and an inlet pipe connected to the pump, said pump being configured to, in a first mode, pump water from an external reservoir not being part of any membrane of the system into the membrane, wherein the membrane is connected to a pipe, through which pressurised water inside the membrane, in another mode, can be drained from the membrane, wherein the system is arranged next to the external reservoir, from which water can be pumped into the membrane, in a manner in which the total volume of water contained in the system is increased, wherein the membrane comprises a bottom, wherein the upper portion and the bottom portion are attached to each other in an outer portion, wherein the outer portion is provided with a reinforcement structure, wherein the reinforcement structure in a non-filled configuration comprises a structure provided with a number of arced portions, wherein the geometry of said arced portions depends on the volume of the membrane.

Hereby, it is possible to provide a more reliable and robust system. Moreover, the system is having an increased storage capacity and a long service life compared with the prior art systems.

Furthermore, the system can be placed in locations in which no continuous water supply is provided and in which the reservoir is not arranged above the membrane.

The system is configured to store energy and/or water (e.g. drinking water).

The top portion of the membrane is preferably made of a flexible material that is capable of being brought into a first configuration in which the membrane is empty or close to being empty and into another (water-filled) configuration, in which the membrane is basically symmetric with respect to its longitudinal axis. Hereby, it is possible to provide a membrane having a large storage capacity.

The membrane is at least partly covered with soil or sand. In a preferred embodiment according to the invention the membrane is completely or almost completely covered with soil or sand.
By the term soil is meant either: a) a mixture of minerals and/or stones and/or organic matter; b) a structure such as a large stone or a concrete block or a combination of the options listed in a) and b). Accordingly, soil may include any suitable combination of objects suitable of being arranged over the membrane to cover it. In one embodiment, a liquid such as water, may be added to the soil to increase the mass of the soil.

By the term sand is meant any of the following: a) gravel or loose granular material that results from the disintegration of rocks, consists of particles smaller than gravel; b) small structures (e.g. basically ball-shaped) made of stone, metal, glass, rubber, plastic or a ceramic material. In one embodiment, a liquid such as water, may be added to the sand to increase the mass of the sand and/or to increase the ability of the sand to change shape.

The system comprises an inlet pipe connected to the membrane. The inlet pipe may be a pipeline, a hose or another tubular member, through which water or another fluid being either a liquid or a gas can be supplied to the membrane.

The inlet pipe is connected to a pump configured, in a first mode, to pump water from a water source into the membrane, wherein the membrane is connected to a pipe, through which pressurised water inside the membrane, in another mode, can be drained from the membrane.
The system is arranged next to a reservoir that may be a lake, a pond, a river or a well. The water can be pumped into the membrane by means of the pump.

The membrane may be arranged at a level that is higher than the level of the reservoir.

The membrane may comprise a bottom portion having a concave shape. Hereby, the capacity of the membrane is larger than the prior art systems.
The system comprises an upper portion and a bottom portion attached to each other in the outer portion of the membrane. In one embodiment, the membrane is fixed to a tubular structure provided in the outer portion.

Hereby, damage of the membrane can be prevented. The tubular structure prevents the membrane from being subjected to peak loads in the area in which the top portion and the bottom portion of the membrane are attached to each other.

The tubular structure may be a tube or a massive rod. The tubular structure preferably has a cylindrical geometry. In an alternative embodiment according to the invention the tubular structure may have a conical geometry. By applying a tubular structure, it is possible to avoid local forces (peak loads) that may potentially damage the membrane.

It may be beneficial that the upper portion and a bottom portion attached to each other in the outer portion, wherein a reinforcement structure is attached to the outer portion of the membrane.

It may be beneficial that the outer portion of the membrane is made as an annular structure surrounding the remaining portion of the membrane.

Hereby, the risk of damaging the membrane is reduced. Moreover, the end portion(s) is/are more resistant to wear and load-induced stresses.

The reinforcement structure may be made in any suitable material that is configured to take the geometry of the end portion of the membrane both in an empty configuration and in a water-filled configuration. The membrane may be produced in a fabric comprising reinforcement fibres.

It may be an advantage that that the reinforcement structure is configured to reduce the tensile forces in the part of the upper portion of the membrane that changes geometry when the volume of the membrane changes. Hereby, the service life of the membrane can be increased.

According to the invention, the reinforcement structure, in a non-filled configuration, comprises a structure provided with a number of arced portions, wherein the geometry of said arced portions depends on the volume of the membrane. Hereby, it is possible to allow the membrane (preferably the outer portion of the top portion of the membrane) to be gradually straightened while the volume of the membrane is increased.

It may be advantageous that each of the arced portions are formed as a sinusoidal curve having an amplitude and a length, wherein the amplitudes of the arced portions are decreasing as function of the volume of the membrane so that:
a) the amplitude of an arced portion has a first length when the membrane is in a first non-filled configuration and;
b) the amplitudes of the arced portion are smaller when the membrane is in a second non-filled configuration, wherein the volume of the membrane is larger than in the first configuration.

In one embodiment, the reinforcement structure comprises a plurality of arced portions each being formed as a sinusoidal curve, when the membrane is arranged in a non-filled configuration. A non-filled configuration may be a configuration, in which the volume of the membrane is 50% or less of the maximum volume of the membrane.

In one embodiment, the reinforcement structure comprises a plurality of arced portions each being formed as a sinusoidal curve each having the same amplitude and wave length.
In one embodiment, the reinforcement structure comprises a plurality of arced portions each being formed as a sinusoidal curve, wherein at least some of the arced portions have different amplitude and/or different wave length.

In one embodiment, the reinforcement structure comprises a plurality of arced portions each being formed as a portion of a sinusoidal curve.
In one embodiment, the reinforcement structure comprises a plurality of arced portions each being formed as a portion of a circular curve.

In a preferred embodiment, the reinforcement structure is made in such a manner that the geometry of reinforcement structure reduces the tensile forces within the reinforcement structure, when the volume of the membrane is increased (e.g. by pumping water into the membrane). Therefore, it may be an advantage that the geometry of the reinforcement structure differs from a planar geometry so that portions (e.g. arced portions) of the reinforcement structure can be extended without (significantly if required at all) increasing the tensile forces within the reinforcement structure.

It may be an advantage that the bottom portion of the membrane comprises a portion made of a clay material.

It may be even further advantageous that the entire bottom portion of the membrane is made of a clay material.

In a preferred embodiment, the bottom portion of the membrane is made of an absorbent aluminium phyllosilicate clay such as bentonite. By using a clay to build the bottom portion of the membrane the bottom portion will be "self-healing" so that in case that a crack is made in the bottom portion of the membrane.

In one embodiment, the bottom portion extends beyond the length of the top portion of the membrane.
It may be advantageous that the system comprises an upper portion and a bottom portion attached to each other in an outer portion, wherein the outer portion is supported by a base structure.

Hereby, the base structure can support the end portion(s) of the membrane. Accordingly, the load of the membrane can be reduced.
It may be beneficial that at least one base structure comprises a convex contact surface supporting the outer portion. A convex contact surface supporting the outer portion distributes the load into a large area, hereby minimising the peak load that the outer portion of the membrane is exerted to.

It may be an advantage that the membrane is arranged below soil and/or sand in a manner, in which the membrane is configured to vertically displace the soil and/or sand arranged above the membrane.

Hereby, the weight of the soil and/or sand can be displaced, and potential energy can be stored in the membrane.

It may be beneficial, that the membrane is completely covered by soil and/or sand. Hereby, the system has the largest capacity.

It may be advantageous that the central portion of the membrane is covered by soil, wherein the outer portion of the membrane is covered by sand. By providing an area with sand that is arranged above the outer portion of the membrane, it is possible to allow the areas above the outer portion of the membrane to be moved easily. This may be an advantage since this area is required to move more than the remaining portion of the membrane.

In one embodiment, the outer portion (the peripheral part of the membrane) is covered by a portion of sand and/or small particles such as small rubber balls, small metal structures, ceramics structures or a mixture thereof. The sand or the alternative material (small particles) is to allow the outer portion of the membrane to be deformed more easily. Accordingly, the sand or the alternative material is should be a formable material.

In one embodiment, the sand or the alternative material is encased in an encasing. It is possible to use a bag structure (e.g. a plastic bag) or a fabric sack to separate the sand or the alternative material from the surroundings.
In one embodiment, a liquid such as water is added to the sand in order to increase the ability of the sand to change shape. This will make it easier for the outer portion of the membrane to expand when the volume of the membrane is increased. A liquid will reduce the friction between the particles/structures of the sand hereby improving the ability of the sand to change shape.

It may be beneficial that the upper portion of the membrane has a semi-oval cross-section when the membrane is filled with water, whereas the bottom portion of the membrane, when being filled with water remains the same geometry as in the non-filled configuration.

Hereby, it is possible to provide a system having a large capacity (for saving energy and/or water).

It may be advantageous that the system comprises a housing provided with:
- a pump connected to the inlet pipe;
- a turbine generator connected to an outlet pipe connected to the membrane.

Hereby, the water inside the membrane can be discharged from the membrane through an outlet pipe connected to the bottom portion of the membrane and water can be discharged from the membrane through the outlet pipe connected to the turbine.
It may be an advantage that the membrane is basically symmetric with respect to its longitudinal axis then the membrane is filled with water.

In one embodiment according to the invention the system comprises a turbine generator integrated with the pump in one pump turbine constituting a single unit. Hereby, it is possible to apply the same unit (the pump turbine) for producing electrical energy and pumping water or another liquid.

In another embodiment according to the invention the system comprises:
- a first connection structure through which the pump is connected to the membrane;
- a turbine generator and
- a second connection structure through which the turbine generator is connected to the membrane, wherein the turbine generator is electrically connected to an electric network for delivering electrical energy to said electrical network, wherein the turbine generator is in fluid communication with a pipeline for delivering water. Hereby, it is possible to apply the system to both store water or another liquid and to store energy in the membrane.

The first connection structure and the second connection structure may preferably be pipes, tubes, hoses or other structures configured to convoy the fluid from the pump to the membrane and from the membrane to the pump turbine, respectively.

The network may be the grid used for delivering electrical energy to a group of suppliers.

The network may alternatively be an electrical network for a single supplier (e.g. an industrial company).

In one embodiment, the system comprises a sealing member arranged to sealingly surround the soil and/or sand that covers the membrane. Therefore, the weight of the volume of soil and sand surrounded by the sealing member can be increased by filling water (or another liquid) into the volume of soil and/or sand. Thus, the potential energy (gravity induced) of the system can be increased in an easy an inexpensive manner.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic, cross-sectional side view of a system according to the invention;
- Fig. 2A: shows a schematic, cross-sectional view of a system according to the invention in a configuration, in which the membrane is full;
- Fig. 2B: shows a schematic, cross-sectional view of the system shown in Fig. 2A, in a configuration, in which the membrane has been drained (is almost empty);
- Fig. 3: shows a schematic, cross-sectional view of an end portion of a system according to the invention;
- Fig. 4: shows a close-up view of an end portion of a system according to the invention;
- Fig. 5A: shows a schematic, cross-sectional view of a system according to the invention in a configuration, in which the membrane is full;
- Fig. 5B: shows a schematic, cross-sectional view of the system shown in Fig. 2A, in a configuration, in which the membrane has been drained (is almost empty);
- Fig. 6A: shows a schematic, cross-sectional view of a system according to the invention;
- Fig. 6B: shows a schematic, cross-sectional view of another system according to the invention;
- Fig. 7: shows a schematic, cross-sectional view of a further system according to the invention;
- Fig. 8: shows a view of a system that corresponds to the system shown in Fig. 1 in a configuration, in which the membrane has been emptied;
- Fig. 9A: shows a schematic top view of a membrane of a system according to the invention
- Fig. 9B: shows a close-up view of an end portion of a system according to the invention;
- Fig. 10A: shows a schematic, cross-sectional view of a system according to the invention in a configuration, in which the membrane is full;
- Fig. 10B: shows a schematic, cross-sectional view of another system according to the invention in a configuration, in which the membrane is full;
- Fig. 11A: shows a schematic, cross-sectional view of a system according to the invention in a configuration, in which the membrane is full and
- Fig. 11B: shows a schematic, cross-sectional view of another system according to the invention in a configuration, in which the membrane is full.

### Detailed description of the invention

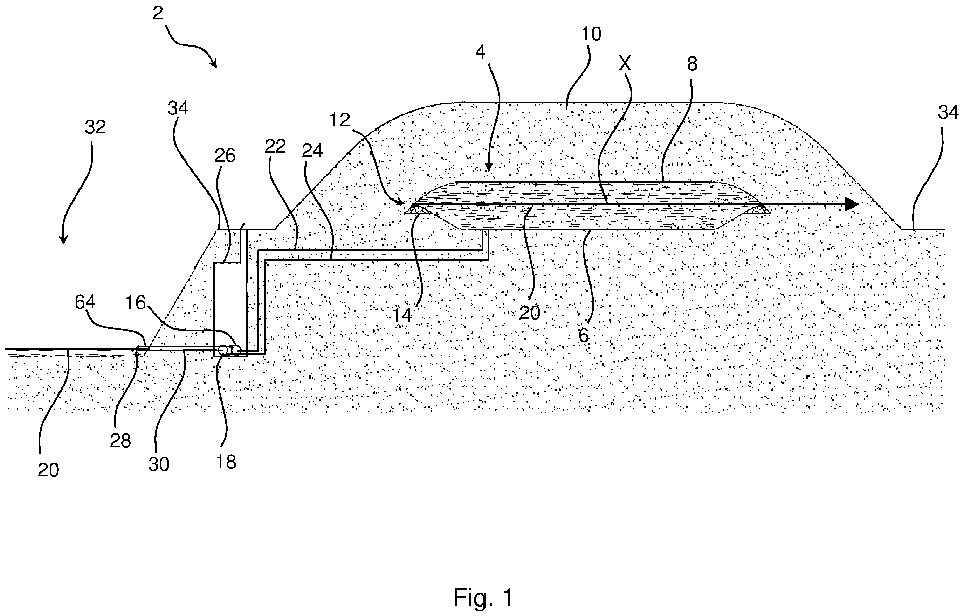

Referring now in detail to the drawings for the purpose of illustrating preferred embodiments of the present invention, a system 2 for storage of energy and/or water of the present invention is illustrated in Fig. 1.

Fig. 1 is a schematic, cross-sectional side view of a system for storage of energy and/or water according to the invention. The system 2 comprises a membrane 4 covered with soil 10. The membrane 4 is arranged next to a pond 32 containing water 20. The membrane 4 has an outer portion 12 surrounding the inner portion of the membrane 4. A base structure 14 supports the outer portion 12 of the membrane 4. The base structure 14 may be made of concrete, metal, stone or another hard material. The membrane 4 has a top portion 8 and a bottom portion 6.
The system 2 comprises a housing 26 for housing a turbine generator 16 and a pump 18. The pump 18 is arranged in the bottom portion of the housing. The pump 18 is configured to pump water 20, flowing from the pond 32 through an inlet pipe 30 and an inlet member 28 provided in the distal end of the inlet pipe 30, into the membrane 4 through an inlet pipe 24 connected to the bottom portion 6 of the membrane 4. The turbine generator 16 is arranged in the bottom portion of the housing next to the pump 18.

The water inside the membrane 4 can be discharged from the membrane 4 through an outlet pipe 22 connected to the bottom portion of the membrane 4. The outlet pipe 22 is connected to a turbine generator 16 (configured to produce electrical energy as water 20 flows through the turbine generator 16) arranged above the pump 18 inside the housing 26. The housing 26 is arranged below ground level 34 and the pump 18 is arranged at a level below the water level. Accordingly, water 20 can flow to the pump 18 by gravity. One or more valves may be connected to the pipes 22, 24, 30, if desired. However, the pump 18 and the turbine generator 16 are preferably capable of controlling the flow through the pump 18 and the turbine generator 16, respectively. A discharge pipe is connected to the turbine generator 16 for discharging the water 20 into the pond 32.

The system 2 is configured to store potential energy in the membrane 4. Since the water in the membrane 4 is located at a higher level than the turbine generator 16, the water can flow from the membrane 4 into the turbine generator 16 by gravity and the pressure inside (cause by the weight of the overlying structures). Hereby, it is possible to generate electrical energy by means of the turbine generator 16. Accordingly, the system 2 can be used to store electricity by pumping water into the membrane 4 when electricity is available at low cost (e.g. when wind turbines and/or solar panels produce a high amount of energy). The stored energy can then later be used when electrical energy is needed (e.g. when wind turbines and solar panels do not produce a sufficient amount of electrical energy).

The system 2 is configured to store water, preferably fresh water such as drinking water inside the membrane 4. Hereby, the membrane can be used to keep the water cool and safe inside the membrane 4, from where the water 20 can be delivered to any desired recipient by using the pipe 22 and an additional pipe structure (not shown). Accordingly, the water 20 may be used as tap water.

The membrane 4 is basically symmetric with respect to the longitudinal axis X of the membrane when the membrane 4 is filled with water 20.

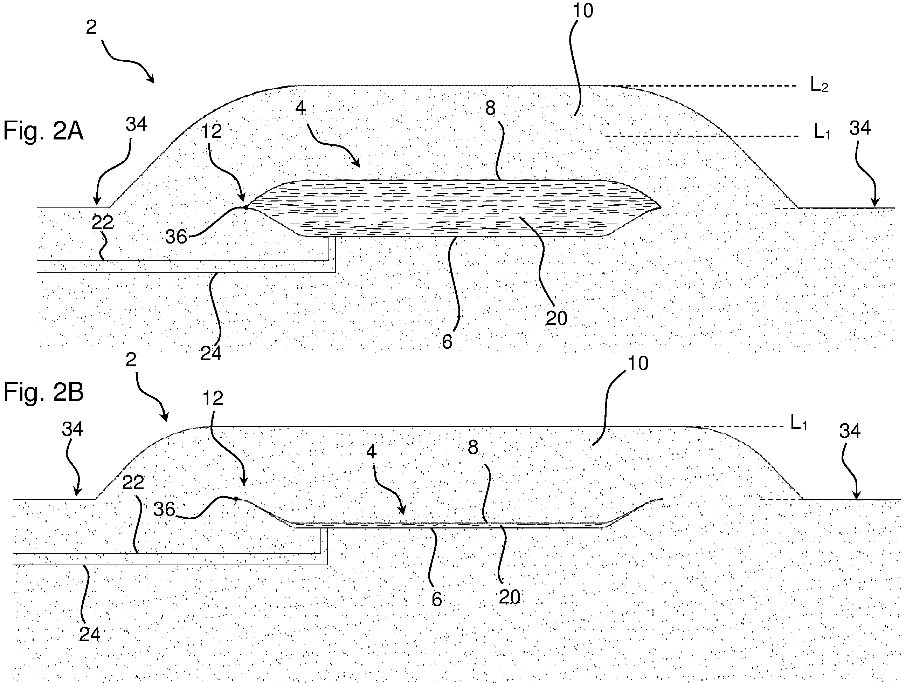

Fig. 2A illustrates a schematic, cross-sectional view of a system 2 according to the invention in a configuration, in which the membrane 4 is full, whereas Fig. 2B illustrates a schematic, cross-sectional view of the system shown in Fig. 2A, in a configuration, in which the membrane 4 has been drained and is almost empty. The system 2 basically corresponds to the one shown in Fig. 1. The system 2 comprises a membrane 4 having an outer portion 12. In the outer portion 12, the membrane 4 is fixed to a tubular structure 36. The tubular structure 36 may be a tube or a massive rod. The tubular structure 36 preferably has a cylindrical geometry. In an alternative embodiment according to the invention the tubular structure 36 may have a conical geometry.

In the outer portion 12, the end part of the membrane 4 may preferably be wound around the tubular structure 36. Hereby, the bottom portion 6 and the top portion 8 of the membrane 4 can be fixed to each other in a simple manner that at the same time allows the membrane to be subject to a high pressure without risking delamination of the end part of the membrane 4. Accordingly, the tubular structure 36 can be used to attach the bottom portion 6 and the top portion 8 of the membrane 4 to each other in a simple and reliable manner.

In Fig. 2A water has been filled into the membrane 4. The top portion 8 membrane 4 has a semi-oval cross-section, whereas the bottom portion 8 of the membrane 4 remains the same geometry as in the non-filled configuration (see Fig. 2B). Accordingly, it is only the top portion 8 of the membrane 4 that is capable of moving. The bottom portion 8 of the membrane 4 cannot move the underlaying soil further downwards, however, the membrane 4 can during the filling process displace the soil 10 above the top portion of the membrane upwardly. Accordingly, the membrane 4 will move the soil 10 from a first level L₁ in the empty configuration to a higher second level L₂ in the filled configuration. In Fig. 2A and Fig. 2B, the first level L₁ and the second level L₂ are located above ground level 34.
The system 2 shown in Fig. 2A and Fig. 2B comprises an inlet pipe 24 connected to the membrane 4 and an outlet pipe 22 connected to the membrane 4. Water 20 may be pumped into the membrane by means of a pump as illustrated in Fig. 1 and be drained from the membrane 4 through the outlet pipe 22 by gravity and the pressure caused by the weight of the soil 10 above the membrane 4. The water flow may be controlled by a valve (not shown).

In the case, in which the system 2 is used for storing drinking water or fresh water, the outlet pipe 22 may be in fluid communication with a water pipeline network suppling water to an area.

In the case, in which the system 2 is used for storing (electrical) energy, the potential energy may be converted into electrical energy by letting the water 20 from the outlet pipe 22 drive a turbine generator capable of producing electrical energy that can be supplied to one or more consumers.

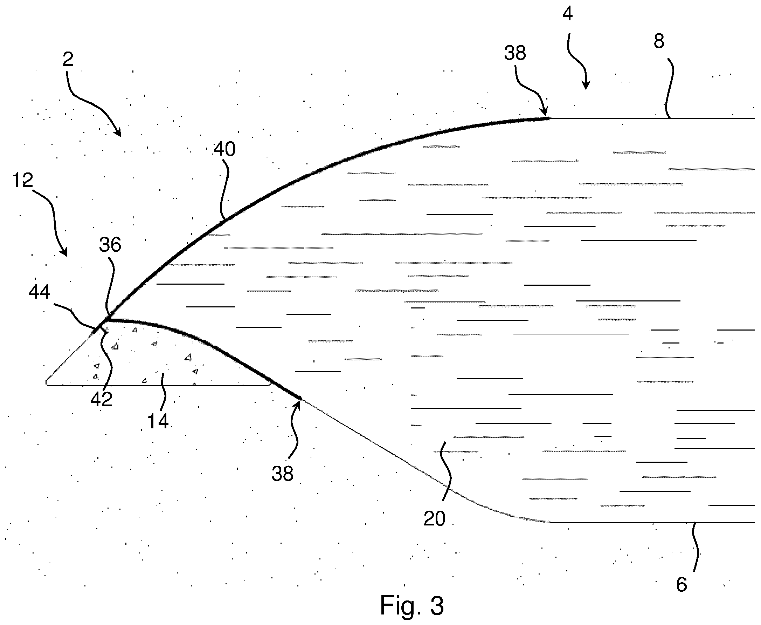

Fig. 3 illustrates a schematic, cross-sectional view of the outer portion 12 of a membrane 4 of a system 2 according to the invention. The membrane 4 is filled with water and comprises a top portion 8 and an opposite bottom portion 6. It can be seen, that a reinforcement structure 40 has been attached to the outer portion 12 of the membrane 4. Hereby, the outer portion 12 is made more resistant against wear and load-induced stresses.

The distal portion of the reinforcement structure 40 covers the outer portion of the membrane 4 and is supported by a base structure 14 having a convex support surface onto which the reinforcement structure 40 and thus the outer portion of the membrane 4 rests. The base structure 14 may be cast in concrete by way of example.

The reinforcement structure 40 comprises a flap 44 extending in extension of the remaining part of the reinforcement structure 40. The flap is fixed to the upper surface of the base structure 14 by means of an anchor 42. The anchor 42 may be any suitable fasting means including a screw, a plug or a nail. The reinforcement structure 40 comprises outer portion that is attached to the top portion 8 and to the bottom portion 6 of the membrane 4 by means of a welding 38. Hereby, it is possible to fix the reinforcement structure 40 to the membrane 4 in a simple, easy and reliable manner.

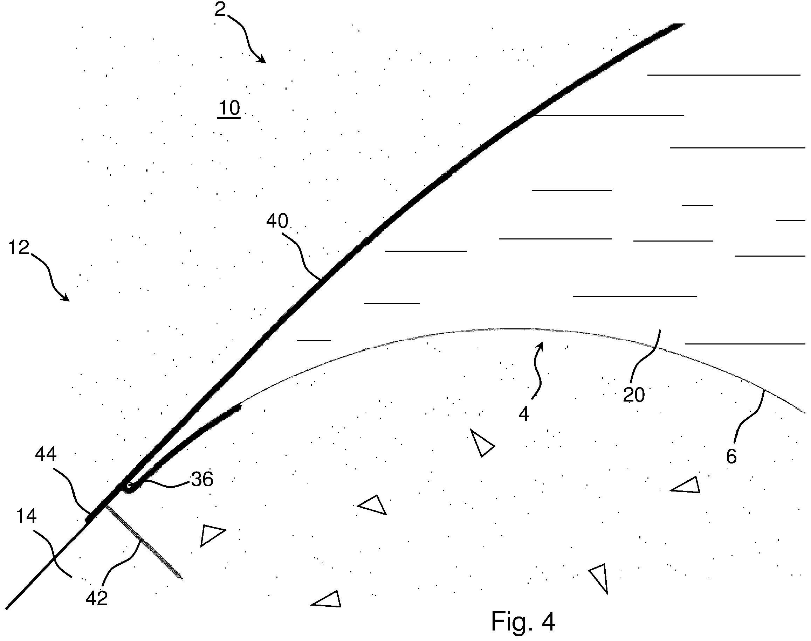

Fig. 4 illustrates a close-up view of the outer portion 12 of a system according to the invention. The system 2 basically corresponds to the one shown in Fig. 3, however, the reinforcement structure 40 at the bottom portion 6 of the membrane 4 is shorter. The reinforcement structure 40 is supported by a concrete base structure 14. It can be seen, that the membrane 4 and the reinforcement structure 40 is wound around a tubular structure 36 formed as pipe. The reinforcement structure 40 has a flap 44 that is attached to the base structure 14 by means of an anchor 42 extending perpendicular to the upper surface of the base structure 14. The membrane 4 is filled with water 20 and covered by soil 10. In one embodiment, reinforcement structure 40 extends from the distal portion of the upper portion 8 to a portion of the bottom portion 6.

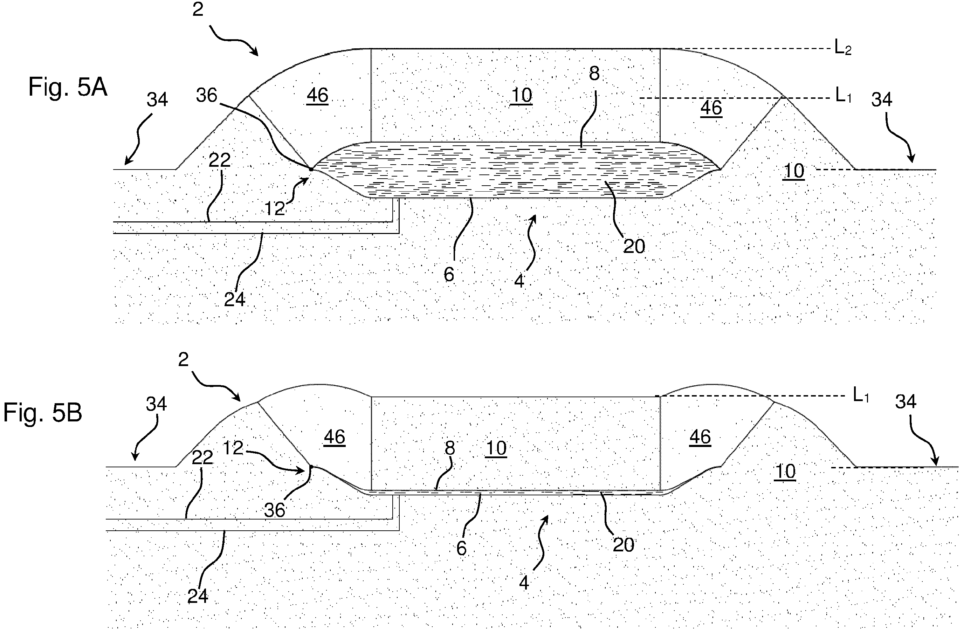

Fig. 5A illustrates a schematic, cross-sectional view of a system 2 according to the invention in a configuration, in which the membrane 4 is full, whereas Fig. 5B illustrates a schematic, cross-sectional view of the system 2 shown in Fig. 2A, in a configuration, in which the membrane 4 has been drained (is almost empty). The system 2 comprises a membrane 4 having an outer portion 12. In the outer portion 12, the membrane 4 is fixed to a tubular structure 36 shaped as a pipe. In the outer portion 12, the membrane 4 is wound around the tubular structure 36.

In Fig. 5A water has been filled into the membrane 4. The top portion 8 of the membrane 4 has been moved upwards (compared to the non-filled configuration shown in Fig. 5B), whereas the bottom portion 8 of the membrane 4 remains the same geometry as in the non-filled configuration (see Fig. 5B). Thus, the top portion 8 of the membrane 4 is capable of moving by displacing the soil 10 above the membrane 4 upwards (in vertical direction). Since the bottom portion 8 of the membrane 4 cannot move the underlaying soil further downwards, however, the bottom portion 8 of the membrane 4 will remain its configuration when water 20 is filled into the membrane.

When water is filled into the membrane 4, the soil 10 above the top portion 6 of the membrane 4 will vertically displace the soil 10. This will cause the membrane 4 to move the soil 10 from a first level L₁ in the empty configuration to a higher second level L₂ in the filled configuration.

The areas above the outer portion of the membrane 4 is moved more than the central portion of the membrane 4 when water 20 is filled into the membrane 4. An area with sand 46 is arranged above the outer portion 12 of the membrane 4 in order to allow the area above the outer portion 12 of the membrane 4 to be moved easily.
The system 2 shown in Fig. 5A and Fig. 5B comprises an inlet pipe 24 connected to the membrane 4 and an outlet pipe 22 connected to the bottom portion 6 of the membrane 4. Water 20 can be supplied to the membrane through an inlet pipe 24 by means of a pump (not shown). Likewise, water 20 can be drained from the membrane 4 through the outlet pipe 22 by gravity and by pressure caused by the weight of the soil 10 above the membrane 4.

The system 2 can be used for storing drinking water or fresh water by bringing the outlet pipe 22 into fluid communication with a water pipeline network. The system 2 can be used to transform electrical energy to potential energy by pumping the water 20 into the pressurised membrane 4. The pressure is created by the weight of the overlaying soil 10. Hereafter, the potential energy can be converted into electrical energy by letting the water 20 from the outlet pipe 22 drive a turbine generator 16 to produce electrical energy.

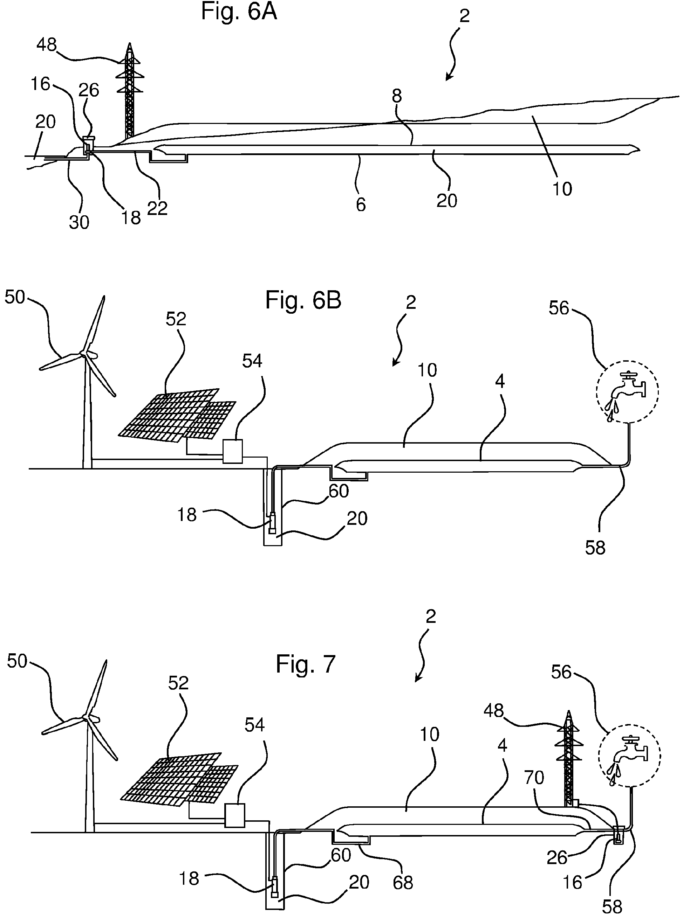

Fig. 6A illustrates a schematic, cross-sectional view of a system 2 according to the invention. The system 2 comprises an inflatable membrane 4 made of a flexible and watertight material. The membrane 4 is covered by soil 10 and constitutes a receptacle configured to receive and store water 20. The membrane 4 comprises a top portion 8 and a bottom portion 6. A pipe 22 is connected to the bottom portion 6 of the membrane 4. This pipe 22 is connected to a housing 26 in its other end. The housing 26 is connected to a water-filled area (e.g. a pond, a sea, a lake, or a river) by means of another pipe 30. A pump 18 and a turbine generator 16 are arranged inside the housing 26. The pump 18 is connected to the pipe 22 and is configured to pump water 20 received by the housing 26 through the pipe 30 into the membrane 4 through the pipe 22. The turbine generator 16 is in fluid communication with the pipe 22.

Accordingly, the turbine generator 16 is capable of producing electrical energy when water 20 from the membrane 4 flows backwards from the membrane 4 into the housing 26 through the turbine. It may be an advantage that the system 2 comprises a control unit (not shown) configured to control the pump 18 and the turbine generator 16. Hereby, it is possible to regulate, when water 20 has to be pumped into the membrane 4 and when water 20 has to be drained from the membrane 4 into the housing 26 hereby producing electrical energy by the turbine generator 16 through which the water 20 flows. The electrical energy produced by the turbine generator 16 can be converted into a suitable type of current (e.g. a high voltage alternating current having a suitable frequency e.g. such as 50 Hz or 60 Hz). The electricity being produced by the system 2 may be distributed via the grid 48. The pump 18 and the turbine generator 16 may be replaced by a pump turbine configured to pump fluid in a first direction and to generate electrical energy when the flow is reversed, and the pump turbine receives a fluid flowing through it.
Fig. 6B illustrates a schematic, cross-sectional view of another system 2 according to the invention. The system 2 comprises a membrane 4 that is preferably made of a flexible and water-tight material. The membrane 4 is covered by a layer of soil 10. The membrane is formed to receive and store water 20 delivered to the membrane from a well provided with a submersible pump 18 connected to an inlet pipe being in fluid communication with the membrane 4.

The pump 18 is supplied with electrical energy produced by a wind turbine 50 and/or solar panels 52. The electricity produced by the wind turbine 50 and the solar panels 52 are converted into a suitable type of current (e.g. an alternating current) by mean of a converter 54 electrically connected to the wind turbine 50 and the solar panels 52 and to the pump 18. Accordingly, the system 2 is capable of using electrical energy produced by means of a wind turbine 50 and/or solar panels 52 to pump drinking water 20 from the well into the membrane 4, from which the water 20 can be distributed to a pipeline 58 connected to a number of costumers having a water tap 56. Furthermore, the membrane 4 can store the water 20 and at the same time deliver a pressure large enough to distribute the water 20 through the pipeline 58 even to remote consumers.

Fig. 7 illustrates a schematic view of a system 2 according to the invention. The system 2 basically corresponds to the system 2 shown in Fig. 6B, however, the system 2 further comprises a housing 26 provided with a turbine generator 16 being electrically connected to the grid 46. The turbine generator 16 is configured to generate electrical energy. Thus, the turbine generator 16 can produce electrical energy when water from the membrane 4 flows through the turbine generator 16 provided in the housing 26. The fresh water stored in the membrane 4 is distributed via a pipeline 58 to a water network (symbolised by a water tap 56). Accordingly, the system 2 is used to both storage of energy and storage of fresh water delivered from the well 20.

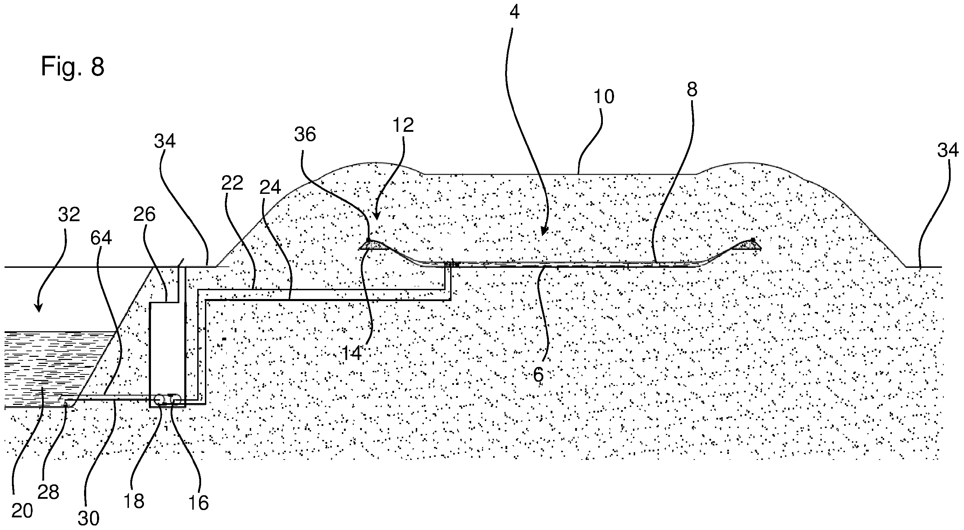

Fig. 8 illustrates a view of the system 2 that basically corresponds to the system shown in Fig. 1. The system 2, however, comprises a discharge pipe 64 connected to the turbine generator 16. The system 2 is shown in a configuration, in which the membrane 4 has been almost completely emptied. The water in the membrane 4 has been discharged through a discharge pipe 64 into an area 32 that now contains the water from the membrane 4. Therefore, the system 2 shown in Fig. 8 is a closed-loop system that will not harm the environment. The water 20 to the system 2 is not required to be present in a river or a lake but can be provided and reused from a pond 32. The water 20 from the membrane 4 can be discharged to the pond 32 and be pumped into the membrane 4 from the pond 32. This water 20 can be provided from any source (e.g. from a tanker) when filling the pond 32.

In one embodiment according to the invention the system 2 comprises a lid structure comprising a plate member and/or a tarpaulin that at least partly covers the pond 32.

In one embodiment according to the invention the system 2 comprises a lid structure comprising a plate member and/or a tarpaulin that completely covers the pond 32 by.

Hereby, it is possible to reduce or even eliminate evaporation of the water 20 into the ambient surroundings. Accordingly, the water 20 in the pond 32 can be reused for a very long-time period without supplying additional extra water to the system 2.

It is important to notice that instead of using a separate pump 18 and a separate turbine generator 16, the turbine generator 16 and the pump 18 may be integrated in a pump turbine being a single unit. A pump turbine may be applied instead of a separate pump and a separate turbine generator in the embodiments shown in Fig. 1, Fig. 6A, Fig. 8.

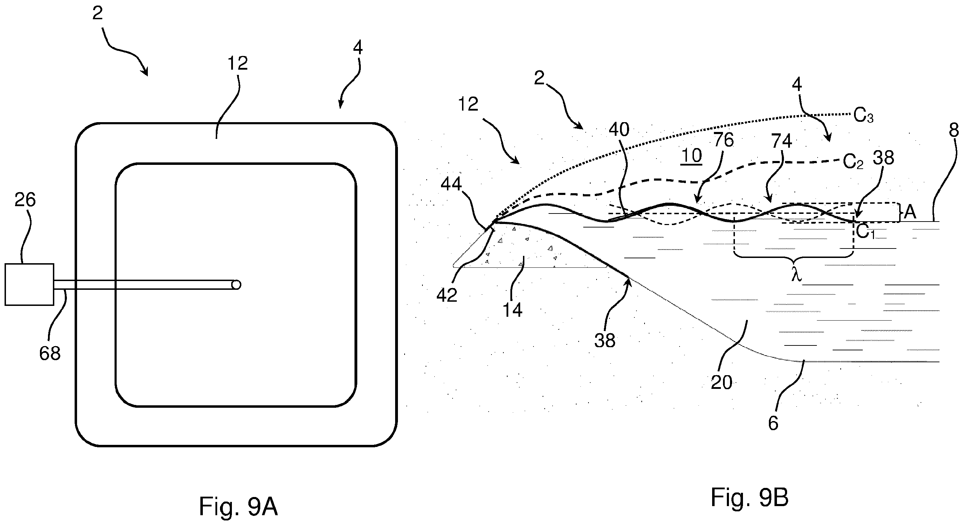

Fig. 9A illustrates a schematic top view of a membrane 4 of a system 2 according to the invention. The system 2 comprises a housing being in fluid communication with the central portion of the membrane 4 through a connection structure 68 that may be provided as a hose or a pipe. The membrane 4 comprises an outer portion 12 surrounding the remaining central portion of the membrane 4. As previously explained it may be an advantage that the membrane 4 comprises an upper portion and a bottom portion attached to each other in the outer portion. Furthermore, in a preferred embodiment according to the invention, a reinforcement structure is attached to the outer portion 12 of the membrane 4.

Fig. 9B illustrates a close-up view of an end portion 12 of a system 2 according to the invention. The membrane 4 is filled with water 20 and comprises a top portion 8 and an opposite bottom portion 6. The outer portion 12 of the membrane 4 comprising a reinforcement structure 40 (indicated with an arced bold line). Hereby, the outer portion 12 is equipped to better resist wear and load-induced stresses due to the motion of the end portion 12 when increasing the volume of the membrane 4.

The distal portion of the reinforcement structure 40 covers the outer portion of the membrane 4 and is supported by a base structure 14 having a convex support surface. The base structure 14 may be made in any supportive material such as concrete, metal or rock.

The reinforcement structure 40 is provided with a flap 44 extending in extension of the remaining part of the reinforcement structure 40. The flap 44 is fixed to the upper surface of the base structure 14 by means of an anchor 42. The anchor 42 may be formed as a screw, a plug or a nail. The reinforcement structure 40 is equipped with an outer portion that is attached to the top portion 8 and to the bottom portion 6 of the membrane 4 by means of a welding 38. Accordingly, it is possible to fix the reinforcement structure 40 to the membrane 4 in a simple, easy and reliable manner.

The reinforcement structure 40 is shown in a first configuration C₁ (indicated by a bold line), a second configuration C₂ (indicated with a stippled line) and a third configuration C₃ (indicated by a dotted line).

The reinforcement structure 40 of the membrane 4 will be arranged in the first configuration C₁ when the volume of the membrane 4 is relatively low (e.g. 50 % or less of the maximum volume of the membrane 4). In this first configuration C₁, the reinforcement structure 40 comprises a plurality of arced portions 74, 76. It has to be underlined that in Fig. 9B the arced portions illustrate cross-sectional portions (and thus two-dimensional portions) of the reinforcement structure 40.

Each of the arced portions 74, 76 are formed as a sinusoidal curve. The first arced portion 74 is formed as a sinusoidal curve having an amplitude A and a length (wave length) λ. The second arced portion 76 is formed as a sinusoidal curve. The amplitude and length (wave length) of the second arced portion 76 is not indicated. The amplitude and length (wave length) of the second arced portion 76 may correspond to the amplitude A and length (wave length) λ of the first arced portion 74. The amplitude and length (wave length) of the second arced portion 76 may differ from the amplitude A and length (wave length) λ of the first arced portion 74.

It is preferred that the reinforcement structure 40 is made in such a manner that the geometry of reinforcement structure 40 reduces the tensile forces within the reinforcement structure 40, when the volume of the membrane 4 is increased (e.g. by pumping water into the membrane 4). Therefore, it may be an advantage that the geometry of the reinforcement structure 40 differ from a planar geometry so that portions (e.g. arced portions 74, 76) of the reinforcement structure 40 can be extended without (significantly if required at all) increasing the tensile forces within the reinforcement structure 40.

In the second configuration C₂ (indicated with a stippled line), the reinforcement structure 40 comprises arced portions, however, compared with the first configuration C₁, the amplitudes of the arced portions are reduced and further the lengths of the arced portions are increased. Accordingly, the reinforcement structure 40 is more straighten in the second configuration C₂ than in the first configuration C₁.

In the third configuration C₃ (indicated by a dotted line), the reinforcement structure 40 has been straightened and thus the reinforcement structure 40 comprises no arced portions. When the reinforcement structure 40 goes from the second configuration C₂ to the third configuration C₃, the structures (and arced portions) of the reinforcement structure 40 are being straightened upon filling the membrane 4. Due to the arced portions, the process of straightening the reinforcement structure 40 can be accomplished without applying large tensile forces. Accordingly, the arced portions of the reinforcement structure 40 allows for straightening the reinforcement structure 40 in a manner, in which the load and wear (due to tensile forces during expansion of the membrane 4) can be reduced hereby increasing the service life of the membrane 4 and thus the system 2.

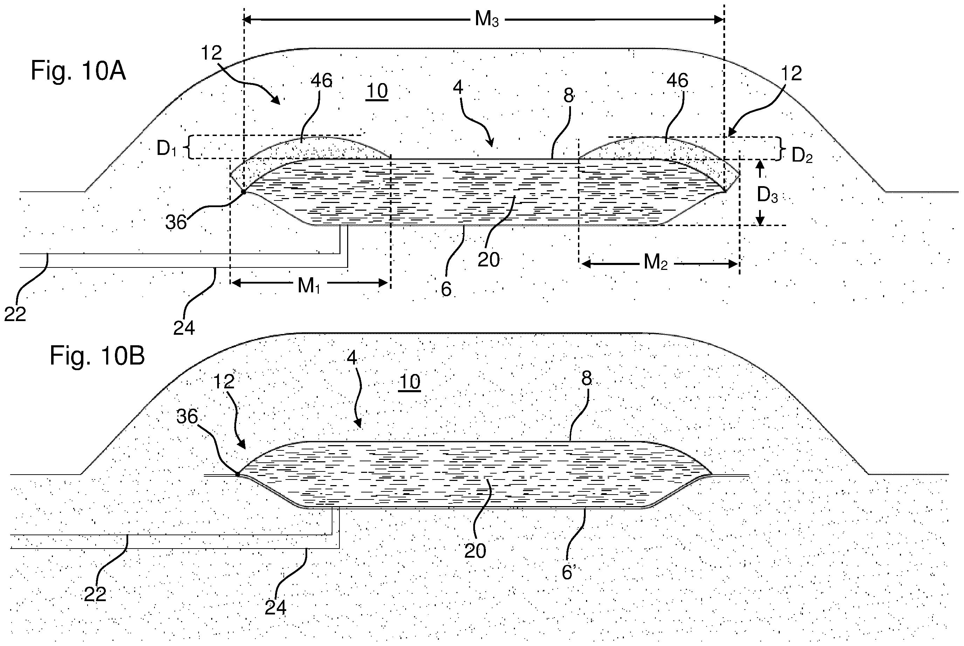

Fig. 10A illustrates a schematic, cross-sectional view of a system according to the invention in a configuration, in which the membrane 4 is full. The membrane 4 is covered by soil 10, however, the outer portion 12 (the peripheral part of the membrane 4) is covered by a portion of sand 46. It is important to underline that sand 46 may be replaced by another material such as small rubber balls, small metal structures, ceramics structures or a mixture thereof. The object of the sand 46 or the alternative material is to allow the outer portion 12 of the membrane to be deformed more easily. Accordingly, the sand 46 or the alternative material is should be a formable material.

In one embodiment, the sand 46 or the alternative material is encased in an encasing. It is possible to use a bag structure (e.g. a plastic bag) or a fabric sack to separate the sand 46 or the alternative material from the surroundings. It may be an advantage to add a liquid such as water to the sand 46. Adding a liquid such as water to the sand will increase the ability of the sand 46 to change shape. Accordingly, the outer portion 12 of the membrane 4 can easier expand when the volume of the membrane 4 is increased. A liquid will moreover increase the weight of the sand 46. A liquid such as water may be added to the soil 10 in order to increase the weight of the soil 10.
The length M₁, M₂ and thickness D₁, D₂ of the portions with sand 46 are indicated. It can be seen that the length M₁, M₂ of the portions with sand 46 is smaller than the length (diameter) M₃ of the membrane 4. In fact, the length M₁, M₂ of the portions with sand 46 is smaller than one third of the length M₃ of the membrane 4. Moreover, thickness D₁, D₂ of the portions with sand 46 is smaller than the thickness D₃ of the membrane 4. In fact, the length M₁, M₂ of the portions with sand 46 is smaller than one third of the thickness D₃ of the membrane 4. The bottom portion 6 of the membrane 4 may preferably be made in a waterproof plastic, rubber, or coated-fabric material. The bottom portion 6 may be made of or contain polyethylene, polypropylene, bitumen, polyvinyl chloride, polyurethanes, ethylene propylene diene monomer (M-class) rubber EPDM, or metal sheet.

Fig. 10B illustrates a schematic, cross-sectional view of another system according to the invention in a configuration, in which the membrane 4 is full. The bottom portion 6' of the membrane 4 is made of a clay material. In one embodiment, the bottom portion 6' of the membrane 4 is made of an absorbent aluminium phyllosilicate clay such as bentonite clay.

Bentonite is capable of "self-healing" in case that a crack is made in the bottom portion 6' of the membrane 4. Accordingly, by making the bottom portion 6' of the membrane 4 in bentonite clay, the bottom portion 6' is capable of a sealing a leakage if a leakage occurs.

It can be seen that the bottom portion 6' extends beyond the length of the top portion 8 of the membrane 4. The bottom portion 6' may be arranged as a first layer upon which the top portion 8 of the membrane 4 is subsequently arranged. The use of a tubular structure 36 may be an advantage in an embodiment, in which the bottom portion 6' of the membrane 4 in made in a clay material such as bentonite clay.

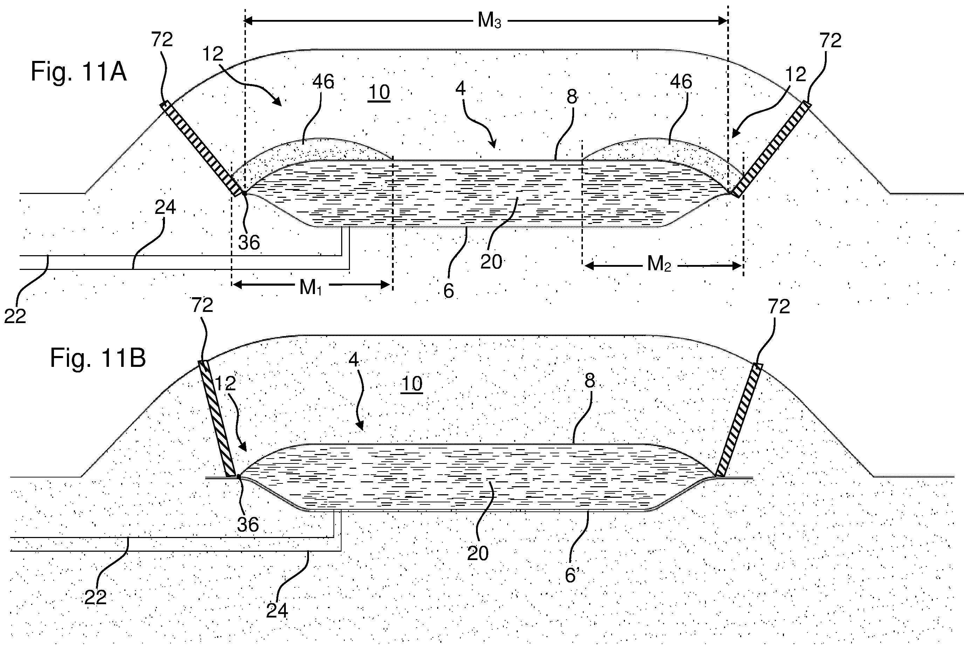

Fig. 11A illustrates a schematic, cross-sectional view of a system according to the invention in a configuration, in which the membrane 4 is full. The system basically corresponds to the one shown in Fig. 10A, however, a sealing member 72 is arranged to sealingly surround the soil 10 and sand 46 that covers the membrane 4. Accordingly, the weight of the volume of soil 10 and sand 46 surrounded by the sealing member 72 can be increased by filling water (or another liquid) into the volume of soil 10 and sand 46. Accordingly, the potential energy (gravity induced) of the system can be increased.

The sealing member 72 may be made in a rigid material such as concrete, stone or metal. It is preferred that the sealing member 72 is water resistant and arranged in a manner in which the sealing member 72 seals against the distal portion of the end portion 12 so that water added to the volume of soil 10 and sand 46 cannot escape by flowing out through a leakage.

The bottom portion 6 of the membrane 4 may preferably be made in a waterproof plastic, rubber, or coated-fabric material. The bottom portion 6 may be made of or contain polyethylene, polypropylene, bitumen, polyvinyl chloride, polyurethanes, ethylene propylene diene monomer (M-class) rubber EPDM, or metal sheet.

Fig. 11B illustrates a schematic, cross-sectional view of another system according to the invention in a configuration, in which the membrane 4 is full. The system illustrated in Fig. 11B basically corresponds to the system shown in Fig. 10B. A sealing member 72 is, however, arranged to sealingly surround the soil 10 and sand 46 that covers the membrane 4. Thus, the weight of the volume of soil 10 and sand 46 surrounded by the sealing member 72 can be increased by filling a liquid such as water into the volume of soil 10 and sand 46 hereby increasing the gravity induced potential energy of the system. The bottom portion 6' of the membrane 4 is made in a clay material such as bentonite clay.

### List of reference numerals

- 2: System for Storage of Energy and/or Water
- 4: Membrane
- 6: Bottom portion
- 6': Bottom portion made of a clay material (e.g. bentonite)
- 8: Top portion
- 10: Soil
- 12: Outer portion
- 14: Base structure (e.g. concrete)
- 16: Turbine generator
- 18: Pump
- 20: Water
- 22, 24: Pipe
- 26: Housing
- 28: Inlet member
- 30: Pipe
- 32: Pond
- 34: Ground level
- 36: Tubular structure
- 38: Welding
- 40: Reinforcement structure
- 42: Anchor
- 44: Flap
- 46: Sand
- 48: Grid
- 50: Wind turbine
- 52: Solar panel
- 54: Converter
- 56: Water tap
- 58: Pipeline
- 60: Well
- 64: Discharge pipe
- 68, 70: Connection structure
- 72: Sealing member
- 74, 76: Arced portion
- L₁, L₂: Level
- M₁, M₂: Length
- M₃: Length
- λ: Length
- D₁, D₂: Thichness
- D₃: Thichness
- A: Amplitude
- C₁, C₂: Configuration
- C₃: Configuration
- X: Longitudinal axis

## Claims

1. A system (2) for storage of energy and/or water (20), wherein said system (2) comprises:
- a watertight membrane (4) being at least partly covered with soil (10) or sand (46),
- an inlet pipe (24) connected to said membrane (4),
wherein the system (2) comprises a pump (18) and an inlet pipe (24) connected to the pump (18), said pump (18) being configured to, in a first mode, pump water (20) from an external reservoir (32, 60) not being part of any membrane of the system (2) into the membrane (4), wherein the membrane (4) is connected to a pipe (22, 24, 58), through which pressurised water inside the membrane (4), in another mode, can be drained from the membrane (4), wherein the system (2) is arranged next to the external reservoir (32, 60), from which water (20) can be pumped into the membrane (4), in a manner in which the total volume of water (20) contained in system (2) is increased, wherein the membrane (4) comprises an upper portion (8) and a bottom portion (6), wherein the upper portion (8) and the bottom portion (6) are attached to each other in an outer portion (12), **characterised in that** the outer portion (12) is provided with a reinforcement structure (40), wherein the reinforcement structure (40) in a non-filled configuration (C₁, C₂) comprises a structure provided with a number of arced portions (74, 76), wherein the geometry of said arced portions (74, 76) depends on the volume of the membrane (4).

2. A system (2) according to claim 1, **characterised in that** the reinforcement structure (40) is configured to reduce the tensile forces in the part of the upper portion (8) of the membrane (4) that changes geometry when the volume of the membrane (4) changes.

3. A system (2) according to claim 1, **characterised in that** each of the arced portions (74, 76) are formed as a sinusoidal curve having an amplitude (A) and a length (λ), wherein the amplitudes (A) of the arced portions (74, 76) are decreasing as function of the volume of the membrane (4) so that:
a) the amplitude (A) of an arced portion (74) has a first length (A) when the membrane (4) is in a first non-filled configuration (C₁) and;
b) the amplitudes (A) of the arced portion (74) is smaller when the membrane (4) is in a second non-filled configuration (C₂), wherein the volume of the membrane (4) is larger than in the first configuration (C₁).

4. A system (2) according to one of the preceding claims, **characterised in that** the bottom portion (6) comprises a portion made of a clay material.

5. A system (2) according to one of the preceding claims, **characterised in that** the membrane (4) has a concave shape seen from the inside of the membrane (4).

6. A system (2) according to one of the preceding claims, **characterised in that** the membrane (4) is fixed to a tubular structure (36) in an outer portion (12), wherein the tubular structure (36) is a tube or a massive rod, preferably having a cylindrical geometry or alternatively a conical geometry.

7. A system (2) according to one of the preceding claims, **characterised in that** the membrane (4) is arranged at a level that is higher than the level of the reservoir (32, 60).

8. A system (2) according to one of the preceding claims, **characterised in that** the upper portion (8) and the bottom portion (6) are attached to each other in the outer portion (12), wherein the outer portion (12) is supported by a base structure (14).

9. A system (2) according to claim 8, **characterised in that** at least one base structure (14) comprises a convex contact surface supporting the outer portion (12).

10. A system (2) according to one of the preceding claims, **characterised in that** the membrane (4) is completely covered by soil (10) and/or sand (46).

11. A system (2) according to claim 10, **characterised in that** the central portion of the membrane (4) is covered by soil (10), wherein the outer portion (12) of the membrane (4) are covered by sand (46).

12. A system (2) according to one of the preceding claims, **characterised in that** the upper portion (8) of the membrane (4) has semi-oval cross-section when the membrane (4) is filled with water, whereas the bottom portion (6) of the membrane (4), when being filled with water (20) remains the same geometry as in the non-filled configuration.

13. A system (2) according to one of the preceding claims, **characterised in that** the system (2) comprises a housing (26) provided with the pump (18) connected to the inlet pipe (24);
- a turbine generator (16) connected to an outlet pipe (22) connected to the membrane (4).

14. A system (2) according to one of the preceding claims, **characterised in that** the system (2) comprises a turbine generator (16) integrated with the pump (18) in one pump turbine constituting a single unit.

15. A system (2) according to one of the preceding claims, **characterised in that** the system (2) comprises:
- first connection structure (68) through which the pump (18) is connected to the membrane (4);
- a turbine generator (16); and
- a second connection structure (70) through which the turbine generator (16) is connected to the membrane (4),
wherein the turbine generator (16) is electrically connected to an electric network (48) for delivering electrical energy to said electrical network (48), wherein the turbine generator (16) is in fluid communication with a pipeline (58) for delivering water (20).

## Patentansprüche

1. System (2) zur Speicherung von Energie und/oder Wasser (20), wobei das System (2) Folgendes umfasst:
- eine wasserdichte Membran (4), die zumindest teilweise mit Erde (10) oder Sand (46) bedeckt ist,
- ein Einlassrohr (24), das mit der Membran (4) verbunden ist,
wobei das System (2) eine Pumpe (18) und ein Einlassrohr (24), das mit der Pumpe (18) verbunden ist, umfasst, wobei die Pumpe (18) dafür konfiguriert ist, in einem ersten Modus Wasser (20) aus einem externen Reservoir (32, 60), das nicht Teil einer Membran des Systems (2) ist, in die Membran (4) zu pumpen, wobei die Membran (4) mit einem Rohr (22, 24, 58) verbunden ist, durch das Druckwasser innerhalb der Membran (4) in einem anderen Modus aus der Membran (4) abgelassen werden kann, wobei das System (2) neben dem externen Reservoir (32, 60) angeordnet ist, aus dem Wasser (20) so in die Membran (4) gepumpt werden kann, dass das gesamte enthaltene Wasservolumen (20) in dem System (2) erhöht wird, wobei die Membran (4) einen oberen Abschnitt (8) und einen unteren Abschnitt (6) umfasst, wobei der obere Abschnitt (8) und der untere Abschnitt (6) in einem äußeren Abschnitt (12) aneinander befestigt sind, **dadurch gekennzeichnet, dass** der äußere Abschnitt (12) mit einer Verstärkungsstruktur (40) versehen ist, wobei die Verstärkungsstruktur (40) in einer nicht gefüllten Konfiguration C₂) eine Struktur umfasst, die mit einer Anzahl von bogenförmigen Abschnitten (74, 76) versehen ist, wobei die Geometrie der bogenförmigen Abschnitte (74, 76) vom Volumen der Membran (4) abhängt.

2. System (2) nach Anspruch 1, **dadurch gekennzeichnet, dass** die Verstärkungsstruktur (40) dafür konfiguriert ist, die Zugkräfte in dem Teil des oberen Abschnitts (8) der Membran (4) zu reduzieren, der die Geometrie ändert, wenn sich das Volumen der Membran (4) ändert.

3. System (2) nach Anspruch 1, **dadurch gekennzeichnet, dass** jeder der bogenförmigen Abschnitte (74, 76) als Sinuskurve mit einer Amplitude (A) und einer Länge (λ) ausgebildet ist, wobei die Amplituden (A) der bogenförmigen Abschnitte (74, 76) als Funktion des Volumens der Membran (4) abnehmen, so dass:
a) die Amplitude (A) eines bogenförmigen Abschnitts (74) eine erste Länge (A) aufweist, wenn sich die Membran (4) in einer ersten nicht gefüllten Konfiguration (C₁) befindet;
b) die Amplituden (A) des bogenförmigen Abschnitts (74) kleiner sind, wenn sich die Membran (4) in einer zweiten nicht gefüllten Konfiguration (C₂) befindet, wobei das Volumen der Membran (4) größer ist als in der ersten Konfiguration (C₁).

4. System (2) nach einem der vorhergehenden Ansprüche, **dadurch gekennzeichnet, dass** der untere Abschnitt (6) einen Abschnitt aus einem Tonmaterial umfasst.

5. System (2) nach einem der vorhergehenden Ansprüche, **dadurch gekennzeichnet, dass** die Membran (4) von der Innenseite der Membran (4) aus gesehen eine konkave Form aufweist.

6. System (2) nach einem der vorhergehenden Ansprüche, **dadurch gekennzeichnet, dass** die Membran (4) an einer rohrförmigen Struktur (36) in einem äußeren Abschnitt (12) befestigt ist, wobei die rohrförmige Struktur (36) ein Rohr oder ein massiver Stab ist, vorzugsweise mit zylindrischer Geometrie oder alternativ mit konischer Geometrie.

7. System (2) nach einem der vorhergehenden Ansprüche, **dadurch gekennzeichnet, dass** die Membran (4) auf einem Niveau angeordnet ist, das höher ist als das Niveau des Reservoirs (32, 60).

8. System (2) nach einem der vorhergehenden Ansprüche, **dadurch gekennzeichnet, dass** der obere Abschnitt (8) und der untere Abschnitt (6) im äußeren Abschnitt (12) aneinander befestigt sind, wobei der äußere Abschnitt (12) von einer Grundstruktur (14) getragen wird.

9. System (2) nach Anspruch 8, **dadurch gekennzeichnet, dass** mindestens eine Grundstruktur (14) eine konvexe Kontaktfläche aufweist, die den äußeren Abschnitt (12) trägt.

10. System (2) nach einem der vorhergehenden Ansprüche, **dadurch gekennzeichnet, dass** die Membran (4) vollständig mit Erde (10) und/oder Sand (46) bedeckt ist.

11. System (2) nach Anspruch 10, **dadurch gekennzeichnet, dass** der mittlere Abschnitt der Membran (4) mit Erde (10) bedeckt ist, wobei der äußere Abschnitt (12) der Membran (4) mit Sand (46) bedeckt ist.

12. System (2) nach einem der vorhergehenden Ansprüche, **dadurch gekennzeichnet, dass** der obere Abschnitt (8) der Membran (4) einen halbovalen Querschnitt aufweist, wenn die Membran (4) mit Wasser gefüllt ist, wobei der untere Abschnitt (6) der Membran (4), wenn er mit Wasser (20) gefüllt ist, die gleiche Geometrie wie in der nicht gefüllten Konfiguration behält.

13. System (2) nach einem der vorhergehenden Ansprüche, **dadurch gekennzeichnet, dass** das System Folgendes umfasst: (2) ein Gehäuse (26), das mit der Pumpe (18) versehen ist, die mit dem Einlassrohr (24) verbunden ist;
- einen Turbinengenerator (16), der mit einem Auslassrohr (22) verbunden ist, das mit der Membran (4) verbunden ist.

14. System (2) nach einem der vorhergehenden Ansprüche, **dadurch gekennzeichnet, dass** das System (2) einen Turbinengenerator (16) umfasst, der mit der Pumpe (18) in einer einzelnen Pumpturbine integriert ist, die eine einzige Einheit bildet.

15. System (2) nach einem der vorhergehenden Ansprüche, **dadurch gekennzeichnet, dass** das System (2) Folgendes umfasst:
- erste Verbindungsstruktur (68), über die die Pumpe (18) mit der Membran (4) verbunden ist;
- einen Turbinengenerator (16); und
- eine zweite Verbindungsstruktur (70), über die der Turbinengenerator (16) mit der Membran (4) verbunden ist, wobei der Turbinengenerator (16) mit einem elektrischen Netz (48) elektrisch verbunden ist, um elektrische Energie an das elektrische Netz (48) zu liefern, wobei der Turbinengenerator (16) mit einer Rohrleitung (58) in Fluidverbindung steht, um Wasser (20) zuzuführen.

## Revendications

1. Système (2) de stockage d'énergie et / ou d'eau (20), dans lequel ledit système (2) comprend :
- une membrane étanche (4) étant au moins en partie recouverte de terre (10) ou de sable (46),
- un tuyau d'entrée (24) reliée à ladite membrane (4),
dans lequel le système (2) comprend une pompe (18) et un tuyau d'entrée (24) relié à la pompe (18), ladite pompe (18) étant configurée pour, dans un premier mode, pomper de l'eau (20) depuis un réservoir externe (32, 60) ne faisant partie d'aucune membrane du système (2) dans la membrane (4), la membrane (4) étant raccordée à un tuyau (22, 24, 58), à travers lequel l'eau sous pression à l'intérieur de la membrane (4), dans un autre mode, peut être évacuée de la membrane (4), dans lequel le système (2) est disposé à côté du réservoir externe (32, 60), à partir duquel l'eau (20) peut être pompée dans la membrane (4), de manière à ce que le volume total d'eau (20) contenu dans le système (2) est augmenté, dans lequel la membrane (4) comprend une partie supérieure (8) et
une partie inférieure (6), dans lequel la partie supérieure (8) et la partie inférieure (6) sont fixées l'une à l'autre dans une partie externe (12), **caractérisé en ce que** la partie externe (12) est pourvue d'une structure de renfort (40), dans lequel la structure de renfort (40) dans une configuration non remplie C₂) comprend une structure pourvue d'un certain nombre de parties arquées (74, 76), dans lequel la géométrie desdites parties arquées (74, 76) dépend du volume de la membrane (4) .

2. Système (2) selon la revendication 1, **caractérisé en ce que** la structure de renfort (40) est configurée pour réduire les efforts de traction dans la partie de la partie supérieure (8) de la membrane (4) qui change de géométrie lorsque le volume de la membrane (4) change.

3. Système (2) selon la revendication 1, **caractérisé en ce que** chacune des parties arquées (74, 76) est formée comme une courbe sinusoïdale ayant une amplitude (A) et une longueur (λ), dans lequel les amplitudes (A) des parties arquées (74, 76) sont décroissantes en fonction du volume de la membrane (4) de sorte que :
a) l'amplitude (A) d'une partie arquée (74) a une première longueur (A) lorsque la membrane (4) est dans une première configuration non remplie (C₁) et ;
b) les amplitudes (A) de la partie arquée (74) sont plus faibles lorsque la membrane (4) est dans une deuxième configuration non remplie (C₂), dans lequel le volume de la membrane (4) est plus grand que dans la première configuration (C₁).

4. Système (2) selon l'une des revendications précédentes, **caractérisé en ce que** la partie inférieure (6) comprend une partie réalisée en un matériau argileux.

5. Système (2) selon l'une des revendications précédentes, **caractérisé en ce que** la membrane (4) a une forme concave vue depuis l'intérieur de la membrane (4).

6. Système (2) selon l'une des revendications précédentes, **caractérisé en ce que** la membrane (4) est fixée à une structure tubulaire (36) dans une partie externe (12), dans lequel la structure tubulaire (36) est un tube ou une tige massive, ayant de préférence une géométrie cylindrique ou bien une géométrie conique.

7. Système (2) selon l'une des revendications précédentes, **caractérisé en ce que** la membrane (4) est disposée à un niveau supérieur au niveau du réservoir (32, 60).

8. Système (2) selon l'une des revendications précédentes, **caractérisé en ce que** la partie supérieure (8) et la partie inférieure (6) sont fixées l'une à l'autre dans la partie externe (12), dans lequel la partie externe (12) est supportée par une structure de base (14).

9. Système (2) selon la revendication 8, **caractérisé en ce qu'**au moins une structure de base (14) comprend une surface de contact convexe supportant la partie externe (12).

10. Système (2) selon l'une des revendications précédentes, **caractérisé en ce que** la membrane (4) est entièrement recouverte de terre (10) et / ou de sable (46).

11. Système (2) selon la revendication 10, **caractérisé en ce que** la partie centrale de la membrane (4) est recouverte de terre (10), dans lequel la partie externe (12) de la membrane (4) est recouverte de sable (46).

12. Système (2) selon l'une des revendications précédentes, **caractérisé en ce que** la partie supérieure (8) de la membrane (4) a une section semi-ovale lorsque la membrane (4) est remplie d'eau, tandis que la partie inférieure (6) de la membrane (4), lorsqu'elle est remplie d'eau (20), conserve la même géométrie qu'en configuration non remplie.

13. Système (2) selon l'une des revendications précédentes, **caractérisé en ce que** le système (2) comprend un carter (26) pourvu de la pompe (18) raccordée au tuyau d'entrée (24) ;
- un turbogénérateur (16) relié à un tuyau de sortie (22) relié à la membrane (4).

14. Système (2) selon l'une des revendications précédentes, **caractérisé en ce que** le système (2) comprend un turbogénérateur (16) intégré à la pompe (18) dans une pompe-turbine constituant un ensemble unique.

15. Système (2) selon l'une des revendications précédentes, **caractérisé en ce que** le système (2) comprend :
- une première structure de connexion (68) par l'intermédiaire de laquelle la pompe (18) est connectée à la membrane (4) ;
- un turbogénérateur (16) ; et
- une deuxième structure de connexion (70) par l'intermédiaire de laquelle le turbogénérateur (16) est connecté à la membrane (4),
dans lequel le turbogénérateur (16) est connecté électriquement à un réseau électrique (48) pour fournir de l'énergie électrique audit réseau (48), dans lequel le turbogénérateur (16) est en communication fluidique avec une canalisation (58) pour fournir de l'eau (20).
